# EUROPÄISCHE PATENTSCHRIFT

(11) **EP 2 198 590 B1**
(45) Veröffentlichungstag und Bekanntmachung des Hinweises auf die Patenterteilung: **13.07.2016**
(21) Anmeldenummer: 08801680.3
(22) Anmeldetag: 23.08.2008
(51) Int. Cl.: H04L 29/12, H04L 29/08

(54) **PARAMETRISIERBARE AUSWAHL EINES KOMMUNIKATIONSSYSTEMS AUF BASIS VON NAMENSAUFLÖSUNGSMECHANISMEN**
PARAMETERIZABLE SELECTION OF A COMMUNICATION SYSTEM ON THE BASIS OF NAME RESOLUTION MECHANISMS
SÉLECTION PARAMÉTRISABLE D'UN SYSTÈME DE COMMUNICATION AU MOYEN DE MÉCANISMES DE RÉSOLUTION BASÉE SUR DES NOMS

(30) Priorität: 27.08.2007 DE 102007040621
(43) Veröffentlichungstag der Anmeldung: 23.06.2010
(73) Patentinhaber: T-Mobile International AG, 53227 Bonn (DE)
(72) Erfinder: SPEICHER, Sebastian, 53225 Bonn (DE); DEMEL, Sabine, A-1210 Wien (AT); JACOBSOHN, Dieter, 53229 Bonn (DE); NENNER, Karl-Heinz, 53332 Bornheim (DE)
(74) Vertreter: Riebling, Peter
(86) Internationale Anmeldenummer: PCT/EP2008/006943
(87) Internationale Veröffentlichungsnummer: WO 2009/027066

(56) Entgegenhaltungen:
- EP-A- 0 817 444
- US-A1- 2004 186 850
- US-A1- 2005 124 382

## Beschreibung

### Gebiet der Erfindung

Die Erfindung beschreibt einen parametrisierbaren Mechanismus zur Auswahl von Unterstützungs- und Verwaltungssystemen bzw. des gewünschten Kommunikationspartners im Kontext von Kommunikationsverbindungen unter Ausnutzung von Namensauflösungsmechanismen.

### Stand der Technik

Zunächst wird als Ausgangspunkt der Stand der Technik beschrieben, um anschließend darauf aufbauend die Haupt- und Zusatzmerkmale der Erfindung zu erläutern.

Im Rahmen der Abwicklung und der Verwaltung von Kommunikationsverbindungen zwischen Kommunikationssystemen bzw. zwischen Kommunikationssystemen und -netzwerken sind üblicherweise verschiedene weitere Unterstützungs- bzw. Verwaltungssysteme beteiligt. Bevor eine Kommunikationsverbindung aufgebaut werden kann, sind daher zunächst die benötigten Unterstützungs- und Verwaltungssysteme aufzufinden bzw. auszuwählen und ihre Kommunikationsadresse zu ermitteln. Weiterhin ist gegebenenfalls - abhängig vom Kommunikationsszenario - der gewünschte Kommunikationspartner selbst auszuwählen bzw. aufzufinden. Um beide Fälle allgemein diskutieren zu können wird im Folgenden der Begriff "Gegenstelle" gleichwertig an Stelle der Begriffe Unterstützungs- und Verwaltungssysteme bzw. des Begriffes Kommunikationspartner verwendet,

Falls jeweils mehrere äquivalente Gegenstellen zur Verfügung stehen, ergibt sich die Frage nach
(a) einem geeigneten Auswahlmechanismus unter Berücksichtigung geeigneter Parameter und
(b) im Zusammenhang damit, einem Mechanismus zur Ermittlung der Kommunikationsadrasse der mittels Schritt (a) ausgewählten Gegenstelle.

Letzteres, die Ermittlung der Kommunikationsadresse eines Systems, basiert in vielen Kommunikationsnetzen auf Namensauflösungsmechanismen, die den abstrakten logischen Namen eines Kommunikationspartners bzw. Gegenstelle auf seine tatsächliche Kommunikationsadresse abbilden.

Gemäß dem Oberbegriff des Anspruchs 1 offenbarten die US 2005/0124382 A1, die US 2004/0186850 A1 und EP 0 817 444 A2 jeweils ein Verfahren zum Aufbau einer Kommunikationsverbindung zwischen einem Kommunikationssystem und einer Gegenstelle mittels eines Kommunikationsnetzes, wobei im Kontext der Kommunikationsverbindung eine parametrisierbare Auswahl einer Gegenstelle aus mehreren verfügbaren Gegenstellen unter Ausnutzung von Namensauflösungsmechanismen durchgeführt wird, wobei das Kommunikationssystem mit Hilfe von für die Auswahl einer Gegenstelle genutzten Parametern einen logischen Namen bildet oder die Parameter in einen logischen Namen einbettet und diesen so gebildeten logischen Namen an einen im Kommunikationsnetz vorhandenen Namensauflösungsmechanismus übermittelt, welcher auf Basis dieses logischen Namens und einer Auswahlfunktion eine Gegenstelle auswählt und deren Kommunikationsadresse an das Kommunikationssystem zurückliefert.

### Offenbarung der Erfindung

Die Aufgabe der Erfindung ist es, ein Verfahren anzugeben, das eine parametrisierbare Auswahl von Gegenstellen im Kontext von Kommunikationsverbindungen und -netzwerken, auf Basis von Namensauflösungsmechanismen erlaubt.

Diese Aufgabe wird durch ein Verfahren mit den Merkmalen des Anspruchs 1 gelöst.

Bevorzugte Ausgestaltungen und andere vorteilhafte Merkmale der Erfindung sind in den Unteransprüchen angegeben.

Sei K ein Kommunikationssystem, welches Unterstützungs- bzw. Verwaltungssysteme zum Aufbau von Kommunikationsverbindungen über ein Kommunikationsnetz benötigt bzw. eine Verbindung zu einem Kommunikationspartner über ein Kommunikationsnetz herstellen möchte. Die Aufgabe besteht also darin, eine Gegenstelle entsprechenden Typs auszuwählen sowie deren Kommunikationsadresse zu ermitteln.

Die Kernidee der erfindungsgemäßen Lösung ist nun, dass das Kommunikationssystem K mit Hilfe von für die Auswahl der Gegenstelle genutzten Parametern P1, ..., Pn einen logischen Namen N bildet oder diese in einen logischen Namen N einbettet. Daraufhin übermittelt das Kommunikationssystem K diesen so gebildeten logischen Namen N an einen im Kommunikationsnetz vorhandenen Namensauflösungsmechanismus, welcher auf Basis dieses logischen Namens N und einer Auswahlfunktion F eine Gegenstelle auswählt und deren Kommunikationsadresse zurückliefert.

Der wesentliche Vorteil dieses Ansatz ist somit, dass bereits existierende und in heutigen Kommunikationsnetzen eingesetzte Namensauflösungsmechanismen (inkl. der dafür bereits existierenden Kommunikationsprotokolle) genutzt werden können, um parameterbasiert Gegenstellen auszuwählen und ihre Kommunikationsadresse zu ermitteln. Dies wird erst möglich durch die oben dargestellte erfindungsgemäße Lösung, indem die für die Auswahl benötigten Parameter in den aufzulösenden logischen Namen eingebettet wird bzw. der logischen Namen aus den Parametern gebildet wird. Es können nur einer oder aber mehrere Parameter zur Bildung oder Einbettung in den logischen Namen vorgesehen werden. Der Parameter kann beispielsweise eine Information über den Aufenthaltsort des Kommunikationssystems enthalten. Der Parameter kann Informationen über den Kommunikationsprovider des Kommunikationssystems enthalten. Der Parameter kann Informationen über das dem Kommunikationssystem zugeordnete Teilnehmervertragsverhältnis enthalten. Allgemein können der oder die Parameter Eigenschaften des Kommunikationssystems beschreiben und/oder Eigenschaften des Kommunikationsnetzes und/oder Eigenschaften des Benutzers des Kommunikationssystems.

Ein technisches Beispiel für einen Namensauflösungsmechanismus ist das Domain Name System (DNS). Das DNS ist eine weltweit auf tausende von Servern verteilte hierarchische Datenbank, die den Namensraum des Internets verwaltet. Dieser Namensraum ist in so genannte Zonen unterteilt, für die jeweils unabhängige Administratoren zuständig sind. Hauptsächlich wird das DNS zur Umsetzung von Domainnamen in IP-Adressen benutzt. Dies ist vergleichbar mit einem Telefonbuch, das die Namen der Teilnehmer in ihre Telefonnummer auflöst.

In diesem Fall formt das Kommunikationssystem K mit Hilfe der Parameter P1, ..., Pn einen Domainnamen, welcher dann durch das DNS mittels statisch vorkonfigurierter oder dynamischer Auswahlfunktion F in eine Kommunikationsadresse vom Typ Internet Protocol (IP) umgewandelt und an das Kommunikationssystem K zurückgegeben wird.

Eine bevorzugte Ausführungsform der Erfindung besteht darin, dass die Parameter P1, ..., Pn, oder Informationen zu deren Herleitung im Kommunikationssystem K statisch konfiguriert werden.

Eine bevorzugte Ausführungsform der Erfindung besteht darin, dass das Kommunikationssystem K die Parameter P1, ..., Pn oder Informationen zu deren Herleitung vom Kommunikationsnetz anhand einer spezifischen Abfrage oder durch Rundspruch ("Broadcast") erhält.

Eine bevorzugte Ausführungsform der Erfindung besteht darin, dass das Kommunikationssystem K die Parameter P1, ..., Pn oder Informationen zu deren Herleitung, aufgrund oder im Zuge seiner Anmeldung/Anbindung ("Attach") an das Kommunikationsnetz erhält, beispielsweise beim Einbuchen eines Mobilfunkendgeräts in einem Mobilfunknetz.

Eine bevorzugte Ausführungsform der Erfindung besteht darin, dass das Kommunikationssystem K bereits die Auswahl der Gegenstelle übernimmt und den logischen Namen entsprechend konstruiert.

Eine bevorzugte Ausführungsform der Erfindung besteht darin, dass sowohl das Kommunikationssystem K als auch der Namensauflösungsmechanismus bzw. die darin enthaltene Auswahlfunktion F an der Auswahl der Gegenstelle beteiligt sind) So wie jeweils in weiter oben beschrieben.

Die Auswahlfunktion F kann neben dem logischen Namen N auch noch weitere Parameter berücksichtigen, wie z.B. die Auslastung der zur Verfügung stehenden Unterstützungs- bzw. Verwaltungssysteme oder Kommunikationsparameter oder Auslastung des Kommunikationsnetzes, und zusätzlich auf Basis dieser zusätzlichen Parameter eine entsprechende Gegenstelle auswählen und deren Kommunikationsadresse zurückliefern, z.B. die Kommunikationsadresse des am geringsten ausgelasteten Unterstützungs- bzw. Verwaltungssystems.

Ein Ausführungsbeispiel der Erfindung wird nachfolgend anhand der Zeichnung näher erläutert.

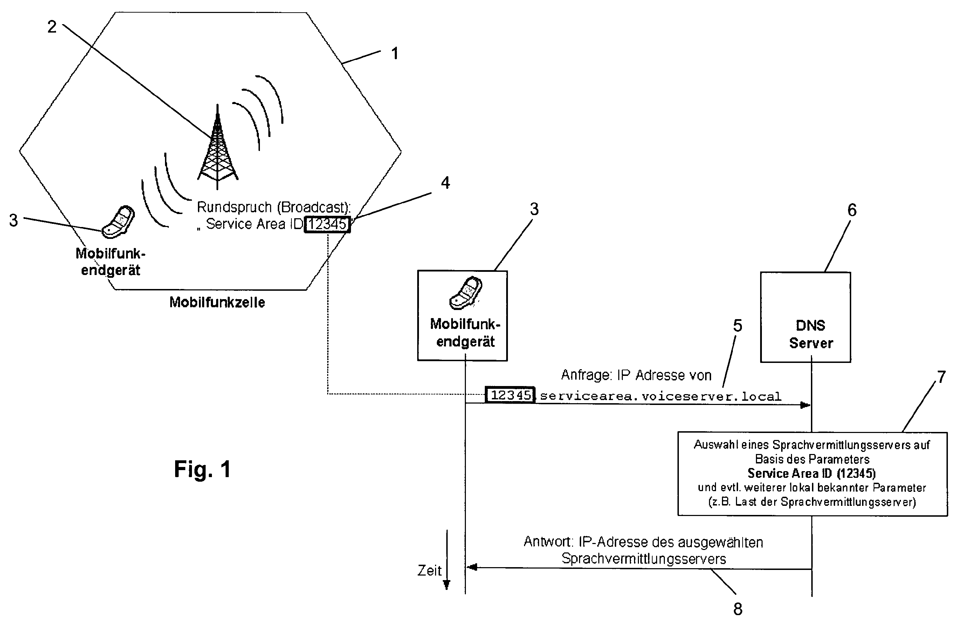

Figur 1 zeigt schematisch ein mobiles Kommunikationsnetz zur Durchführung des erfindungsgemäßen Verfahrens. Es ist eine Mobilfunkzelle 1 des mobilen Kommunikationsnetzes dargestellt und eine die Mobilfunkzelle 1 mit Funksignalen versorgende Funkfeststation 2. Ein Kommunikationssystem 3, beispielsweise in Form eines Mobilfunkendgeräts, befindet sich in der Mobilfunkzelle 1 benötigt die Unterstützung durch ein Unterstützungssystem, beispielsweise einen "Sprachvermittlungsserver" (nicht dargestellt). Die Auswahl des "zuständigen" Sprachvermittlungsservers soll auf Basis einer Information über den Aufenthaltsort des Mobilfunkendgeräts 3 erfolgen. Der ungefähre Aufenthaltsort des Mobilfunkendgeräts 3 kann anhand des Parameters "Service Area ID" der aktuellen Mobilfunkzelle 1 geschehen. Das gesamte durch das Mobilfunknetz abgedeckte Gebiet ist in Service Area IDs 4 unterteilt. Die Service Area ID 4 einer Mobilfunkzelle 1 wird von der zugeordneten Funkfeststationen 2 permanent durch Rundruf (Broadcast) an alle Mobilfunkendgeräte 3 innerhalb der zugehörigen Mobilfunkzelle(n) mitgeteilt. Jede Service Area IDs 4 ist eindeutig und kann von dem Mobilfunkendgerät 3 empfangen werden. Aus der Service Area IDs 4 kann das Mobilfunkendgerät 3 die Mobilfunkzelle 1 und damit den ungefähren Ort bestimmen, an dem es sich aufhält.

Um eine Verbindung zu einem geeigneten Sprachvermittlungsserver aufbauen zu können, bettet das Mobilfunkendgerät 3 die empfangene Service Area ID 4, als Beispiel: "12345", in einen Domainnamen 5, als Beispiel: "servicearea.voiceserver.local" ein, welchen es an einen DNS Server 6 des Mobilfunknetzes übermittelt. Dieser Zusammengesetzte Domainnamen, als Beispiel: "12345.servicearea.voiceserver.local", veranlasst den DNS Server 6, einen entsprechenden Sprachvermittlungsserver auszuwählen und dessen Kommunikationsadresse an das Mobilfunkendgerät 3 zurück zu übermitteln. Der DNS Server wählt nun auf Basis des im Domainnamen enthaltenen Parameters "Service Area ID" und ggf. weiterer bekannter Parameter, z.B. die aktuelle Auslastung der zur Verfügung stehenden Sprachvermittlungsserver, einen geeigneten Sprachvermittlungsserver aus (Ziffer 7) und sendet dessen IP-Adresse (die Kommunikationsadresse) des ausgewählten Sprachvermittlungsservers an das Mobilfunkendgerät zurück (Ziffer 8). Die an das Mobilfunkendgerät 3 übermittelte IP-Adresse (Kommunikationsadresse) kann daraufhin zum Aufbau einer Kommunikationsverbindung mit dem Unterstützungssystem "Sprachvermittlungsserver" verwendet werden.

## Patentansprüche

1. Verfahren zum Aufbau einer Kommunikationsverbindung zwischen einem Kommunikationssystem (3) und einer Gegenstelle mittels eines Kommunikationsnetzes (1, 2), wobei im Kontext der Kommunikationsverbindung eine parametrisierbare Auswahl einer Gegenstelle aus mehreren verfügbaren Gegenstellen unter Ausnutzung von Namensauflösungsmechanismen durchgeführt wird, wobei das Kommunikationssystem (3) mit Hilfe von für die Auswahl einer Gegenstelle genutzten Parametern (4) einen logischen Namen (5) bildet oder die Parameter in einen logischen Namen (5) einbettet und diesen so gebildeten logischen Namen (5) an einen im Kommunikationsnetz vorhandenen Namensauflösungsmechanismus (6) übermittelt, welcher auf Basis dieses logischen Namens (5) und einer Auswahlfunktion (7) eine Gegenstelle auswählt und deren Kommunikationsadresse an das Kommunikationssystem (3) zurückliefert, **dadurch gekennzeichnet,**
**dass** die Auswahlfunktion (7) neben dem logischen Namen (5) weitere Parameter berücksichtigt, wie die Auslastung der zur Verfügung stehenden Unterstützungs- oder Verwaltungssysteme oder Kommunikationsparameter oder Netzauslastung, und auf Basis dieser zusätzlichen Parameter eine entsprechende Gegenstelle auswählt und deren Kommunikationsadresse zurückliefert.

2. Verfahren nach Anspruch 1, **dadurch gekennzeichnet, dass** als Namensauflösungsmechanismus (6) ein Domain Name System, DNS, verwendet wird.

3. Verfahren nach einem der Ansprüche 1 oder 2, **dadurch gekennzeichnet, dass** die Parameter (4) oder Informationen zu deren Herleitung im Kommunikationssystem (3) statisch konfiguriert werden.

4. Verfahren nach einem der Ansprüche 1 oder 2, **dadurch gekennzeichnet, dass** das Kommunikationssystem (3) die Parameter (4) oder Informationen zu deren Herleitung vom Kommunikationsnetz (1, 2) anhand einer spezifischen Abfrage oder durch Rundspruch, "Broadcast", erhält.

5. Verfahren nach einem der Ansprüche 1 oder 2, **dadurch gekennzeichnet, dass** das Kommunikationssystem (3) die Parameter (4) oder Informationen zu deren Herleitung, aufgrund oder im Zuge einer Anmeldung/Anbindung an das Kommunikationsnetz (1, 2) erhält.

6. Verfahren nach einem der Ansprüche 1 bis 5, **dadurch gekennzeichnet, dass** das Kommunikationssystem (3) selbst die Auswahl der Gegenstelle übernimmt und den logischen Namen (5) entsprechend konstruiert.

7. Verfahren nach einem der Ansprüche 1 bis 5, **dadurch gekennzeichnet, dass** sowohl das Kommunikationssystem (3) als auch der Namensauflösungsmechanismus (6) und/oder eine darin enthaltene Auswahlfunktion (7) an der Auswahl der Gegenstelle beteiligt sind.

8. Kommunikationssystem (3) und Kommunikationsnetz mit Einrichtungen zur Durchführung des Verfahrens gemäß den Ansprüchen 1 bis 7.

9. Datenverarbeitungsprogramm mit einem Programmcode, der auf Datenverarbeitungsanlagen eines Kommunikationssystems und Kommunikationsnetzes ausgeführt alle Schritte des Verfahrens nach einem der Ansprüche 1 bis 7 durchführt.

10. Datenträger, der den Programmcode nach Anspruch 9 enthält.

## Claims

1. Method for establishing a communications connection between a communications system (3) and a remote station by means of a communications network (1, 2), wherein in the context of the communications connection a parameterisable selection is made of a remote station from a plurality of available remote stations using name resolution mechanisms, wherein using parameters (4) used for the selection of a remote station the communications system (3) forms a logical name (5) or embeds the parameters in a logical name (5) and transmits this so formed logical name (5) to a name resolution mechanism (6) which is present in the communications network and selects a remote station on the basis of this logical name (5) and a selection function (7) and sends the communications address thereof back to the communications system (3), **characterised in that** in addition to the logical name (5) the selection function (7) considers further parameters such as the load on the available supporting or administering systems or communications parameters or network load, and selects an appropriate remote station on the basis of these additional parameters and sends back its communications address.

2. Method according to claim 1, **characterised in that** a domain name system DNS is used as a name resolution mechanism (6).

3. Method according to one of claims 1 or 2, **characterised in that** the parameters (4) or information for derivation thereof are configured statically in the communications system (3).

4. Method according to one of claims 1 or 2, **characterised in that** the communications system (3) obtains the parameters (4) or information for derivation thereof from the communications network (1, 2) by means of a specific enquiry or by broadcasting.

5. Method according to one of claims 1 or 2, **characterised in that** the communications system (3) obtains the parameters (4) or information for derivation thereof on the basis of or in the course of a request/connection to the communications network (1, 2).

6. Method according to one of claims 1 to 5, **characterised in that** the communications system (3) itself makes the selection of the remote station and constructs the logical name (5) accordingly.

7. Method according to one of claims 1 to 5, **characterised in that** both the communications system (3) and the name resolution mechanism (6) and/or a selection function (7) contained therein are involved in the selection of the remote station.

8. Communications system (3) and communications network with devices for implementing the method according to claims 1 to 7.

9. Data processing programme with a programme code which carries out all the steps of the method according to one of claims 1 to 7 executed on data processing installations of a communications system and communications network.

10. Data storage medium which contains the programme code according to claim 9.

## Revendications

1. Procédé pour établir une liaison de communication entre un système de communication (3) et une station distante à l'aide d'un réseau de communication (1, 2), étant précisé que dans le contexte de la liaison de communication, une sélection paramétrable d'une station distante parmi plusieurs stations distantes disponibles est effectuée à l'aide de mécanismes de résolution de nom, étant précisé que le système de communication (3), à l'aide de paramètres (4) utilisés pour la sélection d'une station distante, forme un nom logique (5) ou intègre les paramètres dans un nom logique (5) et transmet ce nom logique (5) ainsi formé à un mécanisme de résolution de nom (6), présent dans le réseau de communication, qui à partir de ce nom logique (5) et d'une fonction de sélection (7) sélectionne une station distante et renvoie l'adresse de communication de celle-ci au système de communication (3),
**caractérisé en ce que** la fonction de sélection (7) tient compte, en plus du nom logique (5), d'autres paramètres, comme le taux d'utilisation des systèmes de support ou de gestion disponibles, ou des paramètres de communication, ou le taux d'utilisation de réseau, et, à partir de ces paramètres supplémentaires, sélectionne une station distante correspondante et renvoie l'adresse de communication de celle-ci.

2. Procédé selon la revendication 1, **caractérisé en ce qu'**on utilise comme mécanisme de résolution de nom (6) un système de nom de domaine, DNS.

3. Procédé selon l'une des revendications 1 ou 2, **caractérisé en ce que** les paramètres (4) ou des informations sur leur dérivation sont configurées de manière statique dans le système de communication (3).

4. Procédé selon l'une des revendications 1 ou 2, **caractérisé en ce que** le système de communication (3) reçoit les paramètres (4) ou des informations sur leur dérivation à partir du réseau de communication (1, 2) à l'aide d'une interrogation spécifique ou par diffusion, "broadcast".

5. Procédé selon l'une des revendications 1 ou 2, **caractérisé en ce que** le système de communication (3) reçoit les paramètres (4) ou des informations sur leur dérivation sur la base ou dans le cadre d'une ouverture de session/connexion au réseau de communication (1, 2).

6. Procédé selon l'une des revendications 1 à 5, **caractérisé en ce que** le système de communication (3) assure lui-même la sélection de la station distante et construit le nom logique (5) en conséquence.

7. Procédé selon l'une des revendications 1 à 5, **caractérisé en ce que** le système de communication comme le mécanisme de résolution de nom (6) et/ou une fonction de sélection (7) contenue dans celui-ci participent à la sélection de la station distante.

8. Système de communication (3) et réseau de communication avec des dispositifs pour la mise en oeuvre du procédé selon les revendications 1 à 7.

9. Programme de traitement de données avec un code de programme qui, exécuté sur des installations de traitement de données d'un système de communication et d'un réseau de communication, réalise toutes les étapes du procédé selon l'une des revendications 1 à 7.

10. Support de données qui contient le code de programme selon la revendication 9.
